# EUROPÄISCHE PATENTSCHRIFT

(11) **EP 1 936 744 B1**
(45) Veröffentlichungstag und Bekanntmachung des Hinweises auf die Patenterteilung: **22.02.2012**
(21) Anmeldenummer: 07022524.8
(22) Anmeldetag: 20.11.2007
(51) Int. Cl.: H01R 4/48

(54) **Elektrisches Schaltgerät mit einer Kontaktelementanordnung zur Befestigung an demselben**
Electric switching device with contact element for mounting on the same
Appareil électrique avec élément de contact pour la fixation sur le même

(30) Priorität: 19.12.2006 DE 102006059826
(43) Veröffentlichungstag der Anmeldung: 25.06.2008
(73) Patentinhaber: Eaton Industries GmbH, 53115 Bonn (DE)
(72) Erfinder: Knörrchen, Oliver, 50858 Köln (DE); Stanke, Stephan, 53359 Rheinbach (DE)
(74) Vertreter: Müller, Thomas Michael

(56) Entgegenhaltungen:
- DE-A1- 19 642 086
- DE-A1-102004 045 889
- DE-C1- 3 732 267

## Beschreibung

Die Erfindung betrifft ein elektrisches Schaltgerät nach dem Oberbegriff des Anspruchs 1. Eine solche Kontaktelementanordnung ist aus der DE 37 32 267 C1 bekannt.

Die erfindungsgemäße Kontaktelementanordnung dient vorrangig zur Herstellung eines Kontakts zum elektrischen Potential der Tragschiene. Auf Tragschienen angeordnete Schaltgeräte dienen unterschiedlichen Aufgaben, wobei die Notwendigkeit vorliegen kann, eine Massepotentialverbindung (PE-Kontakt) bereitzustellen. Ein solcher Kontakt kann am einfachsten über die Tragschiene erreicht werden, da Tragschienen in der Regel metallisch ausgeführt sind, und die Tragschienen in der Schaltanlage oder auf der Montagewand geerdet sind.

Aus der DE 29905625 U1 ist ein als elektrisch leitende Platte ausgebildetes Kontaktelement bekannt, das mit Befestigungsmittel an einer Unterseite eines Gehäuses eines auf einer Tragschiene aufzurastenden, elektrischen Schaltgeräts befestigbar ist, welches einen elektrischen Kontakt zwischen der Tagschlene und einem elektrischen Stecker vermittelt. Die Befestigung des Kontaktelements geschieht mit Schrauben, die über Werkzeuge betätigt werden. Damit entsteht eine starre Verbindung am Schaltgerät, die nicht auf Dauer angelegt ist.

Es ist die Aufgabe der Erfindung, eine Kontaktelementanordnung anzugeben, welche als Baugruppe ausgeführt ist und welche bedarfsweise und ohne zusätzliche Befestigungsmittel oder Werkzeuge an einem Schaltgerät anbringbar ist.

Die Aufgabe wird durch eine Kontaktelementanordnung nach dem Hauptanspruch gelöst. Weiterführende, vorteilhafte Ausgestaltungen der Erfindung sind in den Unteransprüchen formuliert.

Der Kern der Erfindung besteht aus einem elektrisch leitenden Kontaktelement, an dem eine Kontaktfahne zur Aufnahme einer Kontaktbuchse ausgebildet ist, die das Einführen eines elektrischen Steckers erlaubt, wobei die Kontaktbuchse von einem Gehäuse aus Isoliermaterial umschlossen ist. Den Gegenstand der Erfindung kann man auch als zweiteilige Baugruppe bezeichnen, wobei ein Kontaktelement aus leitfähigem, vorzugsweise als Flachmaterial mit federnden Eigenschaften, mit einer Kontaktfahne das erste Teil und das Gehäuse aus Isoliermaterial das zweite Teil darstellt.

Eine Gerätekombination auf Tragschienen kann eine Anordnung aus Schütz und Motorschutzschalter sein. In der Regel haben Schütze keinen Masseanschluss, so dass mit dem erfindungsgemäßen Gegenstand ein Masseanschluss bereitgestellt werden kann.

Besondere Ausgestaltungen können einzeln oder in Kombination miteinander verwirklicht sein.

In der Kontaktbuchse befindet sich eine Anschlussklemme zur werkzeugfreien Kontaktierung mit einem von außen steckbaren Steckerstift, beispielsweise ein Litzenanschluss.

Das Kontaktelement ist aus leitfähigem Flachmaterial ausgebildet. Vorzugsweise wird oberflächenbehandelte Zinn-Bronze (Cu-Sn 2 .. 8%) vorgeschlagen, welches als Stanzteil vorgefertigt und an den entsprechenden Stellen zur Ausbildung einer Kontaktfahne und mindestens eines Federwinkels umgebogen wird. Die Kontaktfahne ist rechtwinklig abgewinkelt. Die Kontaktfahne dient der Befestigung der Kontaktbuchse. Vorzugsweise wird eine Kontaktbuchse in Form einer Klemme nach dem Prinzip der Push-In-Klemme oder eine andere geeignete, möglichst werkzeuglos klemmende Kontaktbuchse (beispielsweise eine Zugfederklemme) eingesetzt. Klemmen nach dem Push-In-Prinzip werden beispielsweise von de Fa Weidmüller angeboten.

Neben der mindestens einen Federzunge ist mindestens ein Federwinkel, vorzugsweise auch zwei Federwinkel angeordnet. Der oder die Federwinkel geraten beim Aufrasten des Schaltgeräts auf der Tragschiene mit der Tragschiene ebenfalls in Kontakt.

In dem die Kontaktbuchse umgebenden Gehäuse aus Isoliermaterial ist eine von außen zugängliche Kammer zur Aufnahme der Kontaktfahne und zur Aufnahme der Kontaktbuchse vorgesehen. Vorzugsweise soll die Kontaktbuchse als vorgefertigtes Teil auf die Kontaktfahne aufschiebbar und dort sicher gehalten platziert werden können. Alternativ kann auch vorgesehen sein, eine Kontaktbuchse oder Klemme unverlierbar an der Kontaktfahne zu befestigen, beispielsweise durch anlöten. Es ist jedoch von Vorteil einen Aufbau zu wählen, bei dem möglichst geringer Montageaufwand notwendig ist. Das Isolierstoffgehäuse wird nach Befestigung der Kontaktbuchse auf das die Kontaktfahne tragende Ende des Kontaktelements aufgeschoben. Das Gehäuse ist an fünf Seiten geschlossen, und hat nur eine größere Öffnung, nämlich zu der Seite, in die das Kontaktelement bei der Montage eingeführt wird. Die Öffnung ist verschließbar mit einem Kammerverschluss, der passend zur Öffnung ausgebildet ist. Vorzugsweise dient der Kammerverschluss auch der Stabilisierung des Sitzes der Kontaktbuchse im Gehäuse, daher ist der Kammerverschluss passend profiliert zur Anlage an die Kontaktbuchse.

In der Kammer und am Kammerverschluss sind jeweils miteinander zusammenwirkende Rastelemente ausgebildet, so dass der Kammerverschluss in der Kammer unverlierbar verrastbar ist.

In dem Gehäuse ist neben der Steckereinführöffnung eine Entriegelungsöffnung zum Eingriff eines Entriegelungswerkzeugs zur Freisetzung des eingeführten Steckerstifts vorhanden.

An dem Gehäuse sind zwei Nuten ausgebildet, die zur Verrastung mit an dem Schaltgerät ausgebildeten Vorsprüngen zusammenwirken. Die Nuten verlaufen in Richtung senkrecht zur Ebene des Flachmaterials des Kontaktelements, welches - wie erwähnt - parallel zu Unterseite des Gehäuses liegt. Die Vorsprünge, die mit den Nuten zusammengeführt werden, befinden sich an einer Fußleiste des Schaltgeräts, und haben dort eine senkrecht zur Gehäuseunterseite gerichtet Lage. Um einen nachträglichen Einsatz des Kontaktelements an einem Schaltgerät zu ermöglichen, wird vorgeschlagen, an der Fußleiste des Schaltgeräts eine Öffnung derart vorzubereiten, dass in der Fußleiste eine ausbrechbare Gehäuseecke vorhanden ist.

An dem Kontaktelement sind Befestigungsmittel ausgebildet zur Befestigung an der Unterseite, nämlich an der Seite des Schaltgeräts, die der Tragschiene zugewandt ist.

Das Befestigungsmittel besteht aus einem im Flachmaterial des Kontaktelements ausgebildeten, mit Rastzähnen versehenen Loch, welches auf einen an der Unterseite des Schaltgeräts ausgebildeten Rastzapfen aufrastbar ist. Vorzugsweise kann ein Anspritzpunkt aus der Spritzgussform, der in der Regel immer vorhanden ist, als Rastzapfen verwendet werden.

Eine Ausführungsform der Erfindung wird in Figuren veranschaulicht, von denen im Einzelnen zeigen:
Fig. 1 das flächige Kontaktelement mit Kontaktbuchse,
Fig. 2 das Gehäuse mit Kammerverschluss,
Fig. 3 eine Ansicht in das Gehäuse,
Fig. 4 eine Sicht auf die Unterseite eines Schaltgeräts und
Fig. 5 Anordnung einer komplettierten Baugruppe des Kontaktelements unterhalb eines Schaltgeräts.

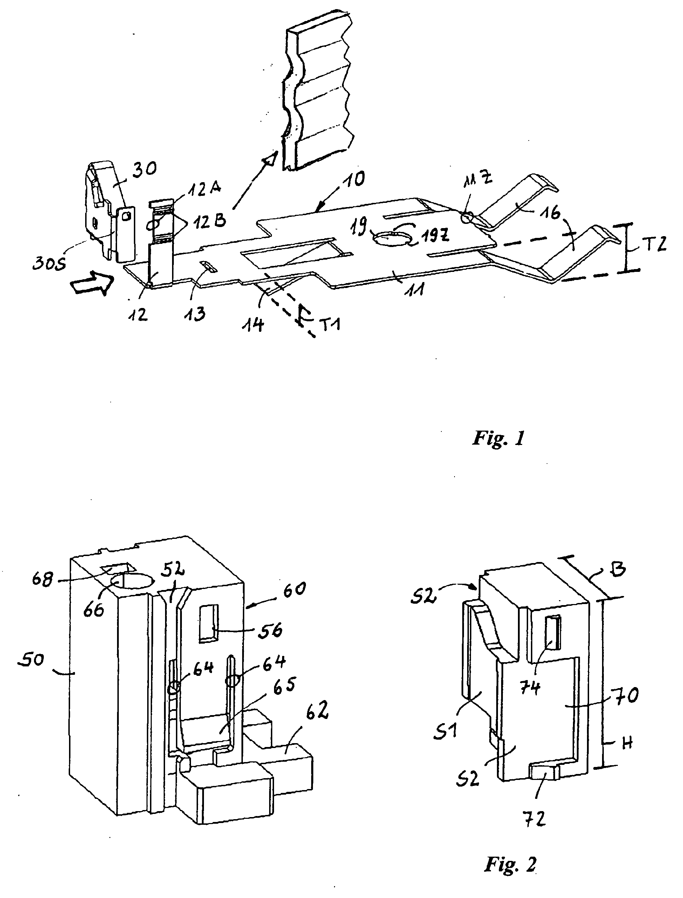

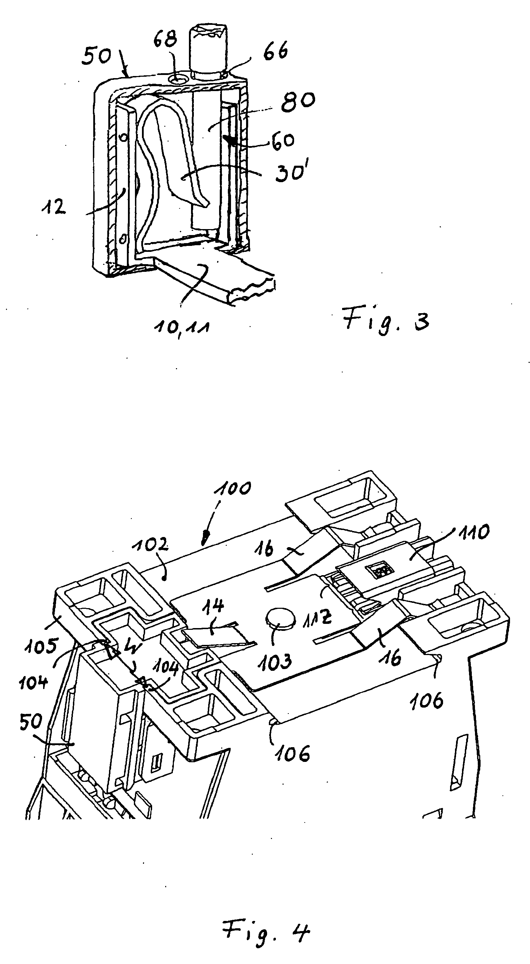

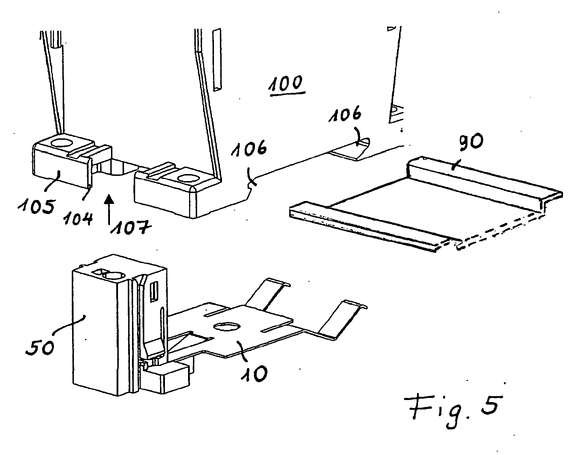

In Figur 1 sind das flächige Kontaktelement 10 und eine Kontaktbuchse in Form einer Kontaktklemme 30 dargestellt. Das Kontaktelement 10 ist aus leitfähigem Material, vorzugsweise aus Zinnbronze hergestellt. An dem Flachmaterial sind eine Kontaktfahne 12, eine Federzunge 14 und zwei Federwinkel 16 ausgebildet. Die letztgenannten Teile des als Stanzteil vorgefertigten Kontaktelements sind aus der Ebene 11 des Flachmaterials umgebogen oder abgewinkelt. Das Kontaktelement liegt auf der Unterseite des Schaltgeräts (siehe Fig. 4), wobei die Federzunge und die Federwinkel 16 vom Schaltgerät weg gerichtet und die Kontaktfahne in Richtung auf das Schaltgerät zugewandt sind. Federzunge und Federwinkel sollen beim Aufrasten des Schaltgeräts auf einer - in Fig. 5 dargestellten - Tragschiene 90 in Kontakt mit der Tragschiene treten. Die Federzunge 14 ist mit einer Tiefe T1 aus der Ebene 11 heraus gestellt. Die Federwinkel 16 erreichen Federwirkung durch Abwinklung im Abstand T2.

Die Kontaktfahne 12 ist rechtwinklig abgewinkelt und dient der Befestigung der Kontaktklemme 30. In Fig. 1 ist eine Push-In-Klemme 30 dargestellt, in die ein elektrischer Stecker (Steckerstift 80; siehe Fig. 3 oder Litzenanschluss) einführbar ist. Der Stecker soll möglichst, ohne ihn zu verschrauben in der Kontaktbuchse halten. Zum Herausziehen des Steckers ist ein Entriegelungswerkzeug zu verwenden.

In der Mitte der Fläche 11 ist ein Loch 19 ausgebildet, welches im inneren Rand mehrere Rastzähne 19Z aufweist. An der Unterseite des Schaltgeräts ist ein Rastzapfen (oder Anspritzpunkt) 103 ausgebildet (siehe Fig. 4), worauf das Kontaktelement 10 befestigt werden kann, wobei die Rastzähne auf dem Rastzapfen aufrasten. Im Bereich, in dem das Gehäuse aufgesetzt wird, ist ein Schlitz 13 vorhanden, in den eine Ecke des Gehäuses 50, bzw. des Kammerverschlusses 70 eingreift, so dass eine Verriegelung des Gehäuses auf dem Kontaktelement entsteht. An der Kante, die dem Schlitz 13 gegenüber liegt, sind ebenfalls Rastzähne 11Z vorhanden, die gegen eine Kunststoffwulst im Bereich der Schieberbefestigung (siehe Fig. 4) verrasten.

Die Figur 2 zeigt das Gehäuse 50 (linke Teilfigur) und den Kammerverschluss 70 (rechte Teilfigur 2B).

Die Kontaktbuchse 30 wird von dem zweiteiligen Gehäuse (50, 70) aus Isoliermaterial umschlossen. Kontaktelement 10 und Gehäuse (50, 70) bilden eine zweiteilige Baugruppe. In dem Gehäuse ist eine Kammer 60 zur Aufnahme der Kontaktfahne und zur Aufnahme der Kontaktbuchse vorhanden.

Vorzugsweise soll die Kontaktbuchse als vorgefertigtes Teil auf die Kontaktfahne aufschiebbar und dort sicher gehalten platziert werden können. An der Kontaktfahne 12 ist eine Rechteckausklinkung 12A vorhanden, die als Haltekante des Steges 30S für die aufsteckbare Push-In-Klemme 30 dient. Zwei Prägungen 12B dienen dem Ausgleich möglicherweise vorhandener Abstandsunterschiede zwischen der Dicke der Kontaktfahne 12 und der Dicke des Materials der Kontaktbuchse 30 um ausreichende Federkraft sicher zu stellen.

Das Gehäuse 50 wird nach Befestigung der Kontaktbuchse auf der Kontaktfahne auf das Kontaktelement 10 aufgeschoben (siehe Pfeil links in Fig. 1). Zur Seite, in die das Kontaktelement bei der Montage eingeführt wird, ist eine Öffnung vorhanden. Diese Öffnung ist mit einem Kammerverschluss 70 verschließbar. Kammerverschluss und entsprechend auch die genannte Öffnung haben die Höhe H und die Breite B.

Der Kammerverschluss 70 dient der Stabilisierung des Sitzes der Push-In-Klemme 30 im Gehäuse, daher ist der Kammerverschluss 70 auf der Seite S 1 passend zur Anlage an die Push-In-Klemme 30 profiliert. Auf den beiden Seiten S2 des Kammerverschlusses 70 sind im unteren und im oberen Bereich je eine Nase 72, 74 ausgebildet. Die Nasen 72, 74 dienen der Verrastung mit dem Gehäuse 50, wobei im Gehäuse 50 im oberen Bereich entsprechende Fenster 56 und im unteren Bereich ein Federelement 65 ausgebildet. Das Federelement 65 ist über seitliche Schlitze 64 scharnierartig an der Seitenfläche des Gehäuses 50 angeordnet.

Im Gehäuse 50 ist neben der Steckereinführöffnung 66 eine Entriegelungsöffnung 68 zum Eingriff eines Entriegelungswerkzeugs zur Freisetzung des eingeführten Steckerstifts vorhanden.

An dem Gehäuse 50 sind zwei Nuten 52 ausgebildet, die zur Verrastung mit an dem Schaltgerät ausgebildeten Vorsprüngen 104 (siehe Fig. 4 und 5) zusammenwirken. Die Nuten 52 verlaufen in Richtung senkrecht zur Ebene 11 des Kontaktelements.

Die Figur 3 zeigt eine Ansicht in das aufgeschnittene Gehäuse 50. Im hohlen Innenraum 60 erstreckt sich fast auf voller Höhe die Kontaktfahne 12. Angedeutet ist eine punktförmige Befestigung einer Kontaktbuchse in Form einer Federklemme 30' an der Kontaktfahne 12. Die in Fig. 3 dargestellte Federklemme 30' soll als Alternative zur Klemmen-Ausführung in Fig. 1 verstanden werden. In dem Gehäuse 50 ist ein eingeführter Steckerstift 80 erkennbar.

Die Fig. 4 zeigt eine Sicht auf die Unterseite 102 eines Schaltgeräts 100 mit eingelegtem Kontaktelement 10. An der Unterseite 102 des Schaltgeräts 100 sind Hinterschneidungen 106 ausgebildet, die zur Verriegelung mit einer Tragschiene 90 dienen. Ebenso ist auf der Unterseite 102 ein Schieber 110 vorhanden, der federnd mit der Tragschiene 90 zusammenwirkt. Die Befestigungs- und Rastelemente des Schaltgeräts 100 mit der Tragschiene 90 sind weithin bekannt, und bedürfen daher keiner weiteren Erläuterung. Am Kontaktelement 10 ist die Lage der Federzunge 14 und der Federwinkel 16 erkennbar. Auf der linken Seite der Fig. 4 befindet sich das Gehäuse 50, welches von seiner Unterseite sichtbar ist. Die Verrastung des Gehäuses 50 mit dem Schaltgerät 100 geschieht über Nuten 52 und entsprechende Vorsprünge 104 an der Fußleiste 105 des Schaltgeräts 100. Nuten 52 und Vorsprünge 104 sind mit der Weite W voneinander beabstandet.

Im Kontaktelement 10 ist ein Loch 19 mit Rastzähnen 19Z ausgebildet, welches mit dem Rastzapfen 103 auf der Unterseite 102 des Schaltgeräts 100 zusammenwirkt und dem Kontaktelement 10 Halt am Schaltgerät 100 gibt. Diese Art der Befestigung ist beispielhaft zu verstehen. Es kann auch vorgesehen sein, auf eine solche Befestigung an der Unterseite 102 des Schaltgeräts 100 zu verzichten, da nach dem Aufschieben auf eine Tragschiene 90 ein eigener Halt entsteht, der keines weiteren Haltemittels bedarf.

Die Vorsprünge 104 in einer Öffnung 107 an der Fußleiste 105 (siehe auch Fig. 5) des Schaltgeräts 100, die mit den Nuten 52 zusammengeführt werden, sind senkrecht zur Gehäuseunterseite 102 gerichtet. Eine Öffnung 107 an der Fußleiste 105 muss jedoch nicht von vornherein sein. Um einen nachträglichen Einsatz des Kontaktelements 10 an einem Schaltgerät 100 zu ermöglichen, kann auch vorgesehen sein, eine Öffnung 107 an der Fußleiste 105 als ausbrechbares Stück auszubilden. Das ausbrechbare Stück kann mit Sollbruchstellen an der Fußleiste 105 vorbereitet sein, so dass bei Bedarf das Stück zu Bildung der Öffnung 107 herausgeknackt werden muss.

In der Fig. 5 wird eine komplettierte Baugruppe der Kontaktelementanordnung in ihrer Lage unterhalb eines Schaltgeräts 100 gezeigt. Die Baugruppe wird von unten in die Öffnung 107 eingeschoben.

### Bezugszeichenliste

- 10: Kontaktelement
- 11: Blech
- 11Z: Zähne
- 12: Kontaktfahne
- 12A: Ausklinkung
- 12B: Prägungen
- 13: Schlitz
- 14: Federzunge
- 16: Federwinkel
- 19: Loch
- 19Z: Zähne
- 30: Kontaktbuchse
- 30S: Steg
- 50: Gehäuse
- 52: Nut
- 54: Rastfeder
- 56: Rastfenster
- 60: Kammer
- 62: Auflagefläche für Kontaktelement
- 64: Schlitz
- 65: Rastung
- 66: Steckeröffnung
- 68: Entriegelungsöffnung
- 70: Verschluss
- 72: erste Rastnase
- 74: zweite Rastnase
- 80: Steckerstift
- 90: Tragschiene
- 100: Schaltgerät
- 102: Unterseite
- 103: Rastzapfen
- 104: Vorsprung, Kante
- 105: Fußleiste
- 106: Hinterschneidung
- 107: Öffnung
- 110: Schieber

- B: Breite des Verschlusses (lichte Weite der Kammeröffnung)
- H: Höhe des Verschlusses (lichte Weite der Kammeröffnung)
- S1, S2: Flächen am Verschluss 70
- T1, T2: Abwinklung
- W: Abstand der Kanten in Öffnung 107

## Patentansprüche

1. Elektrisches Schaltgerät (100) mit einer Kontaktelementanordnung, welche an dem elektrischen Schaltgerät (100) befestigbar ist und welche
ein Kontaktelement (10),
mindestens eine am Kontaktelement (10) ausgebildete Federzunge (14), die beim Aufrasten des Schaltgeräts (100) auf einer Tragschiene (90) mit der Tragschiene (90) in Kontakt gerät,
eine an dem Kontaktelement (10) ausgebildete Kontaktfahne (12), sowie eine von der Kontaktfahne (12) aufgenommene Kontaktbuchse (30), die das Einführen eines elektrischen Steckers erlaubt, umfasst,
**dadurch gekennzeichnet,**
**dass** das elektrische Schaltgerät (100) zur unmittelbaren Verrastung auf der Tragschiene an einer Unterseite (102) Hinterschneidungen (106) aufweist, die zur Verriegelung mit der Tragschiene (90) dienen,
**dass** ein Gehäuse (50) aus Isoliermaterial vorgesehen ist, das die Kontaktbuchse (30) umschließt, und
**dass** Befestigungsmittel (19, 19Z, 52) zum bedarfsweise Befestigen der Kontaktelementanordnung an einem Gehäuse des Schaltgeräts (100) vorgesehen sind.

2. Elektrisches Schaltgerät (100) nach Anspruch 1,
**dadurch gekennzeichnet,**
**dass** das Kontaktelement (10) aus leitfähigem Flachmaterial ausgebildet ist, und dass die Kontaktfahne (12) und die mindestens eine Federzunge (14) von dem Flachmaterial (11) abgewinkelt sind.

3. Elektrisches Schaltgerät (100) nach Anspruch 2,
**dadurch gekennzeichnet,**
**dass** neben der mindestens einen Federzunge (14) mindestens ein Federwinkel (16) angeordnet ist, der beim Aufrasten des Schaltgeräts (100) auf der Tragschiene (90) mit der Tragschiene (90) ebenfalls in Kontakt gerät.

4. Elektrisches Schaltgerät (100) nach einem der vorhergehenden Ansprüche,
**dadurch gekennzeichnet,**
**dass** in dem Gehäuse (50) eine von außen zugängliche Kammer (60) zur Aufnahme der Kontaktfahne (12) und zur Aufnahme der Kontaktbuchse (30) vorgesehen ist und dass passend zur Öffnung der Kammer (60) ein Kammerverschluss (70) einführbar ist.

5. Elektrisches Schaltgerät (100) nach Anspruch 4,
**dadurch gekennzeichnet,**
**dass** in der Kammer (60) und am Kammerverschluss (70) jeweils miteinander zusammenwirkende Rastelemente (56, 65, 72, 74) ausgebildet sind, so dass der Kammerverschluss (70) in der Kammer (60) unverlierbar verrastbar ist.

6. Elektrisches Schaltgerät (100) nach einem der vorhergehenden Ansprüche,
**dadurch gekennzeichnet,**
**dass** in dem Gehäuse (50) neben einer Steckereinführöffnung (66) eine Entriegelungsöffnung (68) vorhanden ist.

7. Elektrisches Schaltgerät (100) nach einem der vorhergehenden Ansprüche,
**dadurch gekennzeichnet,**
**dass** an dem Gehäuse (50) zwei Nuten (52) ausgebildet sind, die der Verrastung mit an dem Schaltgerät (100) ausgebildeten Vorsprüngen (104) zusammenwirken.

8. Elektrisches Schaltgerät (100) nach einem der vorhergehenden Ansprüche,
**dadurch gekennzeichnet,**
**dass** ein im Flachmaterial (11) des Kontaktelements (10) ausgebildetes, mit Rastzähnen (19Z) versehenen Loch (19) vorgesehen ist, welches auf einen an der Unterseite (102) des Schaltgeräts (100) ausgebildeten Rastzapfen (103) aufrastbar ist.

## Claims

1. Electric switching device (100) with a contact element arrangement, which is attachable on the electric switching device (100) and which comprises
a contact element (10),
at least one flexible tongue (14), which is formed on the contact element (10) and which contacts a mounting rail (90) when locking the switching device (100) on the mounting rail (90),
a contact tab (12) formed on the contact element (10), as well as a female contact (30), received by the contact tab (12) and which allows an insertion of an electric male connector,
**characterised in**
**that** the electric switching device (100) has for the direct locking on the mounting rail on a lower side (102) undercuts (106), which serve for locking to the mounting rail (90),
**that** a housing (50), made form an insulating material, is provided, which encloses the female contact (30), and
**that** attachment means (19, 19Z, 52) are provided for the attachment of the contact element arrangement on a housing of the switching device (100), if demanded.

2. Electric switching device (100) according to claim 1,
**characterised in**
**that** the contact element (10) is formed from an electrically conductive flat material, and that the contact tab (12) and the at least one elastic tongue (14) are bent from the flat material (11).

3. Electric switching device (100) according to claim 2,
**characterised in**
**that** in addition to the at least one elastic tongue (14), at least one elastic angle strip (16) is arranged, which, when locking the switching device (100) on the mounting rail (90), also contacts the mounting rail (90).

4. Electric switching device (100) according to one of the preceding claims,
**characterised in**
**that** in the housing (50), a chamber (60), accessible from the outside, is provided for receiving the contact tab (12) and for receiving the female contact (30), and that a chamber closure (70), fitting the opening of the chamber (60), is insertable.

5. Electric switching device (100) according to claim 4,
**characterised in**
**that** in the chamber (60) and on the chamber closure (70), respectively, locking elements (56, 65, 72, 74), which interact with each other, are formed, so that the chamber closure (70) is lockable in the chamber (60) in a manner not to get lost.

6. Electric switching device (100) according to one of the preceding claims,
**characterised in**
**that** in the housing (50), next to a male connector insertion opening (66), an unlocking opening (68) is provided.

7. Electric switching device (100) according to one of the preceding claims,
**characterised in**
**that** on the housing (50), two grooves (52) are formed, which interact, during the locking, with projections (104) formed on the switching device (100).

8. Electric switching device (100) according to one of the preceding claims,
**characterised in**
**that** a hole (19) with locking teeth (19Z) is provided in the flat material (11) of the contact element (10), which is lockable on a locking pin (103) formed on the lower side (102) of the switching device (100).

## Revendications

1. Appareil de commutation électrique (100) avec un agencement d'élément de contact, qui peut être fixé sur l'appareil électrique (100) et qui comprend un élément de contact (10),
au moins une lame à ressort (14) conçue sur l'élément de contact (10), qui est en contact avec le rail porteur (90) lors de l'encliquetage de l'appareil de commutation (100) sur un rail porteur (90),
une cosse de contact (12) conçue sur l'élément de contact (10), ainsi qu'une douille de contact (30) réceptionnée par la cosse de contact (12), qui permet l'introduction d'une prise électrique,
**caractérisé en ce que**
l'appareil de commutation électrique (100) présente pour l'encliquetage direct sur le rail porteur sur un côté inférieur (102) des contre-dépouilles (106), qui servent au verrouillage du rail porteur (90),
**en ce qu'**un boitier (50) à base de matériau isolant est prévu, lequel entoure la douille de contact (30), et
**en ce que** des moyens de fixation (19, 19Z, 52) sont prévus pour la fixation éventuelle de l'agencement d'élément de contact sur un boitier de l'appareil de commutation (100).

2. Appareil de commutation électrique (100) selon la revendication 1,
**caractérisé en ce que**
l'élément de contact (10) est conçu à base de matériau plat conducteur et **en ce que** la cosse de contact (12) et la au moins une lame à ressort (14) sont coudées à partir du matériau plat (11).

3. Appareil de commutation électrique (100) selon la revendication 2,
**caractérisé en ce que**,
à côté de la au moins une lame à ressort (14), est disposée au moins une cornière à ressort (16), laquelle vient également en contact avec le rail porteur (90) lors de l'encliquetage de l'appareil de commutation (100) sur le rail porteur (90).

4. Appareil de commutation électrique (100) selon l'une des revendications précédentes,
**caractérisé en ce que**
une chambre (60) accessible par l'extérieur, est prévue dans le boîtier (50) pour le logement de la cosse de contact (12) et pour le logement de la douille de contact (30) et **en ce qu'**une fermeture de chambre (70) peut être introduite pour aller avec l'ouverture de la chambre (60).

5. Appareil de commutation électrique (100) selon la revendication 4,
**caractérisé en ce que**
à chaque fois des éléments d'encliquetage (56, 65, 72, 74) coopérant les uns avec les autres sont réalisés dans la chambre (60) et sur la fermeture de chambre (70), de sorte que la fermeture de chambre (70) peut être encliquetée de façon imperdable dans la chambre (60).

6. Appareil de commutation électrique (100) selon l'une des revendications précédentes,
**caractérisé en ce que**
une ouverture de déverrouillage (68) est présente dans le boitier (50) à côté d'une ouverture d'introduction de fiche (66).

7. Appareil de commutation électrique (100) selon l'une des revendications précédentes,
**caractérisé en ce que**
deux rainures (52), qui coopèrent pour l'encliquetage avec des saillies (104) réalisées sur l'appareil de commutation (100), sont conçues sur le boitier (50).

8. Appareil de commutation électrique (100) selon l'une des revendications précédentes,
**caractérisé en ce que**
il est prévu un trou (19), conçu dans le matériau plat (11) de l'élément de contact (10) et doté de dents d'encliquetage (19Z), lequel trou peut être encliqueté sur un tenon d'encliquetage (103) conçu sur le côté inférieur (102) de l'appareil de commutation (100).
